# EUROPEAN PATENT SPECIFICATION

(11) **EP 1 747 983 B1**
(45) Date of publication and mention of the grant of the patent: **15.10.2008**
(21) Application number: 06011903.9
(22) Date of filing: 09.06.2006
(51) Int. Cl.: B62K 25/28, B62K 11/10

(54) **Low-floor vehicle**
Niederflurfahrzeug
Véhicule à plancher surbaissé

(30) Priority: 29.07.2005 JP 2005220606
(43) Date of publication of application: 31.01.2007
(73) Proprietor: HONDA MOTOR CO., LTD., Tokyo (JP)
(72) Inventor: Hayashi, Hideki, Saitama 351-0193 (JP); Takahashi, Hirohisa, Saitama 351-0193 (JP); Fujii, Jun, Saitama 351-0193 (JP); Sugioka, Koichi, Saitama 351-0193 (JP); Kinbara, Eiji, Saitama 351-0193 (JP)
(74) Representative: Rupp, Christian

(56) References cited:
- EP-A- 0 937 636
- PATENT ABSTRACTS OF JAPAN vol. 017, no. 598 (M-1504), 2 November 1993 (1993-11-02) -& JP 05 178267 A (SUZUKI MOTOR CORP), 20 July 1993 (1993-07-20)
- PATENT ABSTRACTS OF JAPAN vol. 1998, no. 01, 30 January 1998 (1998-01-30) & JP 09 254858 A (HONDA MOTOR CO LTD), 30 September 1997 (1997-09-30)
- PATENT ABSTRACTS OF JAPAN vol. 014, no. 410 (M-1020), 5 September 1990 (1990-09-05) -& JP 02 158484 A (SUZUKI MOTOR CO LTD), 18 June 1990 (1990-06-18)
- PATENT ABSTRACTS OF JAPAN vol. 013, no. 552 (M-903), 8 December 1989 (1989-12-08) -& JP 01 226486 A (YAMAHA MOTOR CO LTD), 11 September 1989 (1989-09-11)

## Description

The present invention relates to a low-floor type vehicle in which a unit-swing type power unit which is constituted of a power engine which has an output shaft arranged parallel to a rotary axis of a drive wheel and a power transmission mechanism which transmits a rotary power of the output shaft to the drive wheel is supported on a vehicle body frame in a rocking manner by way of a suspension means.

Along with the recent large sizing and the enhancement of power performance in a low-floor type vehicle such as a scooter-type vehicle and the like, the further enhancement of the turning performance is expected. For example, in a scooter-type vehicle disclosed in the Japanese patent document JP 2004-276643 A, herein after referred to as patent document 1, a unit-swing engine which is constituted of an engine and a power transmission means is supported on a vehicle body frame in a rockable manner by way of two link mechanisms, and one link mechanism out of both link mechanisms is allowed to function as a compression rod thus reducing vibrations of the vehicle while regulating a displacement value.

However, with respect to the low-floor type vehicle disclosed in the above-mentioned patent document 1, since a pivot portion is mounted on one portion of the unit-swing engine as viewed in a side view, there exists a limit with respect to the enhancement of the rigidity in the rolling direction (rotational direction about an axis in the longitudinal direction) of the low-floor type vehicle.

Patent document JP 05-178267 A shows a power unit suspension device for a motorcycle having a rear wheel being installed at the rear edge of a power unit which is pivotally installed at the rear edge of an arm installed on a bracket in the low part of a frame, and a cushion unit connected between the rear part of the power unit and the rear upper part of the frame, and the lower edge of the cushion unit and the top edge of an arm at the front upper part of the power unit are connected with two link bars and a swing arm.

Patent document JP 09-254858 A shows a rear wheel suspension device of a scooter wherein the front end of the power unit is connected through a rockable support link and a push rod with a rear frame of the vehicle.

Patent document JP 02-158484 A shows a frame of a scooter wherein a front lower end boss of a power unit is pivotally mounted to a frame leg through a link, and a lever pivotally mounted to the upper end of a cushion unit is pivotally mounted to a boss mounted to the frame leg, and is pivotally mounted to a front upper boss of the power unit through a rod.

Patent document EP 0 937 636 A2 shows a unit swing-type motorcycle engine supporting structure wherein an upper side of the engine case is rotatably held by a vehicle suspending bracket which is axially supported by left and right supporting plates. Moreover, an underside of the engine case is coupled with a rear cushion unit by rods and a lever.

Patent document JP 01-226486 A shows a power unit supporting structure for a motorcycle wherein an upper front section of the power unit is supported on the body frame through a link, while the lower front section of the power unit is coupled through another link and a shock absorber to the body frame.

The present invention has been made under such circumstances and it is an object of the present invention to provide a low-floor type vehicle which can further enhance the turning performance by realizing the increase of the rolling rigidity while reducing the vibrations.

To achieve the above-mentioned object, the invention provides a low-floor vehicle as set out

The invention described in claim 2 is, in addition to the constitution of the invention described in claim 1, characterized in that the suspension means includes a plurality of link mechanisms which connect pivot portions which are provided at a plurality of positions of the unit-swing-type power unit which are different from each other as viewed in a side view respectively to the vehicle body frame, and the plurality of link mechanisms are arranged to displace the unit-swing-type power unit in two directions.

The invention described in claim 3 is, in addition to the constitution of the invention described in claim 1 or claim 2, characterized in that the power engine is an internal combustion engine which includes a forwardly inclined cylinder axis and, at the same time, includes a balancer which is arranged above a crankshaft which constitutes the output shaft.

The invention described in claim 4 is, in addition to the constitution of the invention described in claim 3, characterized in that the balancer is arranged below a connection pipe which connects a throttle body and an air cleaner.

The invention described in claim 5 is, in addition to the constitution of the invention described in claim 1, characterized in that a first straight line which connects a rotary center of the first pivot portion which is arranged below the imaginary straight line out of the two sets of pivot portions which are provided to the unit-swing-type power unit in front of the rotary axis of the drive wheel and a connecting point of the link mechanism to the vehicle body frame which connects the first pivot portion to the vehicle body frame out of the pair of link mechanisms is set to be directed in the approximately longitudinal direction, and a second straight line which connects a rotary center of the second pivot portion which is arranged above the imaginary straight line out of the both pivot portions and a connecting point of the link mechanism to the vehicle body frame which connects the second pivot portion to the vehicle body frame out of both link mechanisms is directed approximately vertical direction.

According to the invention described in claim 1, two sets of pivot portions which are mounted on the unit-swing-type power unit are arranged separately from each other above and below an imaginary straight line which connects the output shaft and a rotary axis of the drive wheel as viewed in a side view, both pivot portions are connected to the vehicle body frame by way of the individual link mechanisms and at least one of both link mechanisms is arranged to displace the unit-swing-type power unit in two directions and hence, it is possible to enhance the rolling rigidity by regulating a behavior of the unit-swing type power unit in the rolling direction thereof.

Further, according to the invention described in claim 2, the plurality of pivot portions which are mounted on the unit-swing type power unit are arranged at the plurality of positions which are different from each other as viewed in a side view, the plurality of link mechanisms which connect these pivot portions to the vehicle body frame individually are arranged to allow the displacement of the unit-swing-type power unit in two directions and hence, it is possible to reduce the vibrations and, at the same time, it is possible to enhance the rolling rigidity.

According to the invention described in claim 3, it is possible to further reduce the vibrations with the use of the balancer and, at the same time, in the internal combustion engine which has a forwardly inclined cylinder axis, it is possible to arrange the balancer by effectively making use of a vacant space which is positioned above the crankshaft.

According to the invention described in claim 4, it is possible to arrange the balancer by effectively making use of a space which is arranged below the connection pipe.

Further, according to the invention described in claim 5, it is possible to separate an instantaneous center of the rocking of the unit-swing type power unit from the rotary axis of the drive wheel and, at the same time, it is possible to set such an instantaneous center of the rocking of the unit-swing type power unit at a position in front of and below the unit-swing type power unit and hence, it is possible to easily attenuate impacts on the vehicle at the time of traveling on a terrain or the like.
Fig. 1 shows a side view of a scooter-type motorcycle.
Fig. 2 shows an enlarged view of a portion indicated by an arrow 2 in Fig. 1.
Fig. 3 shows a cross-sectional view taken along a line 3-3 in Fig. 2.
Fig. 4 shows a cross-sectional view taken along a line 4-4 in Fig. 2.

Hereinafter, a mode for carrying out the present invention is explained in conjunction with one embodiment of the present invention shown in attached drawings.

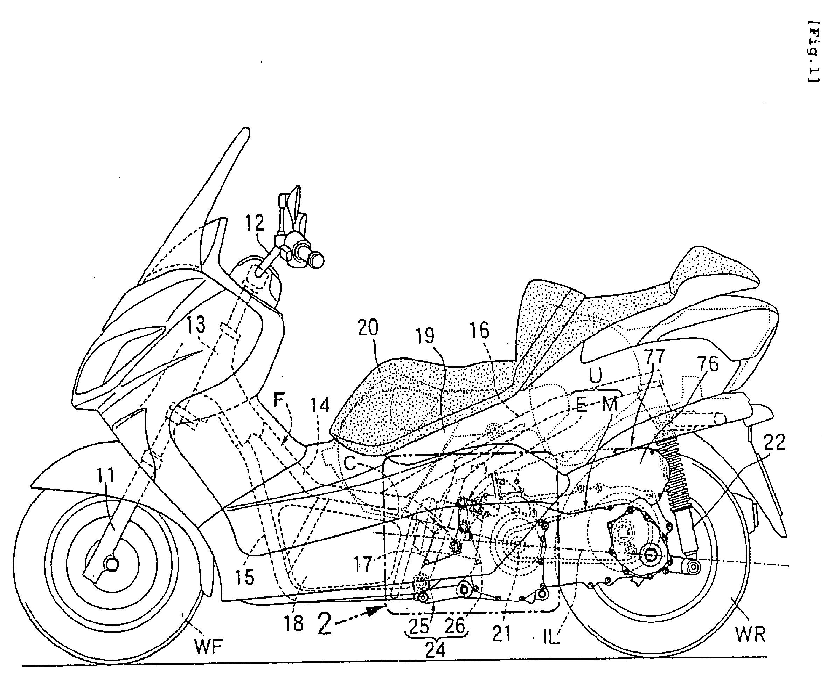

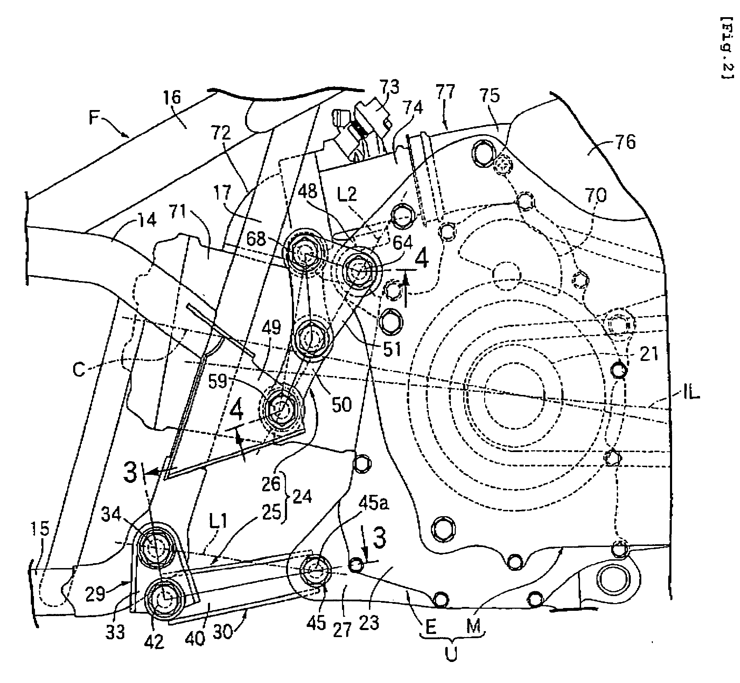

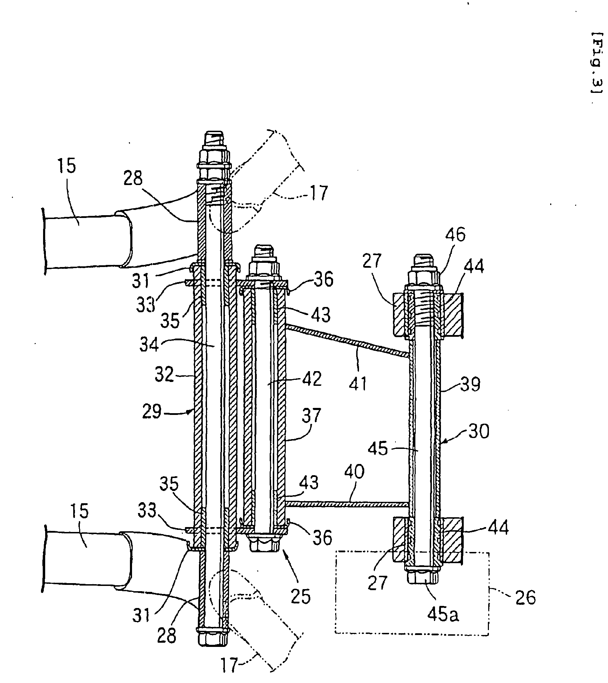

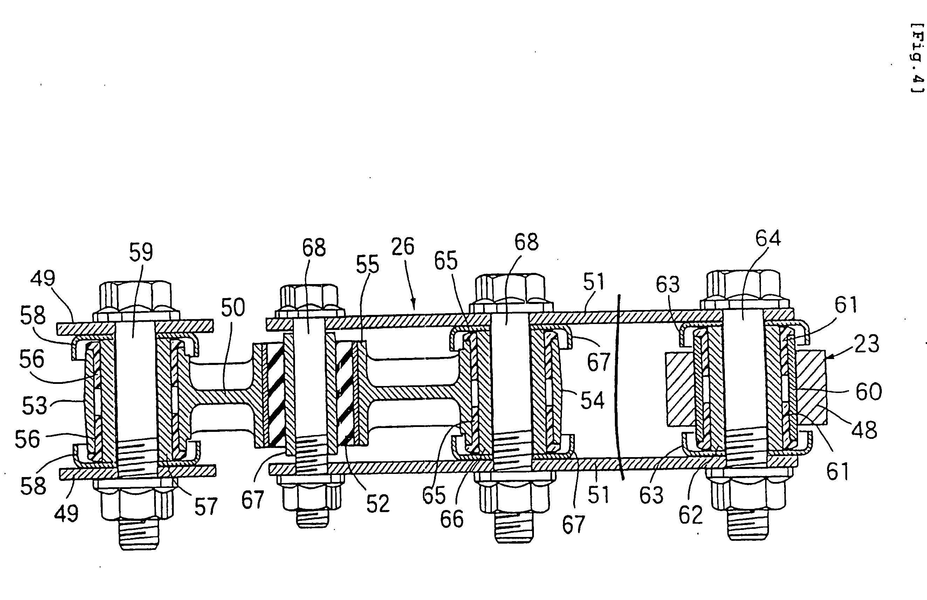

Fig. 1 to Fig. 4 show one embodiment of the present invention, wherein Fig. 1 is a side view of a scooter-type motorcycle, Fig. 2 is an enlarged view of a portion indicated by an arrow 2 in Fig. 1, Fig. 3 is a cross-sectional view taken along a line 3-3 in Fig. 2 and Fig. 4 is a cross-sectional view taken along a line 4-4 in Fig. 2.

First of all, in Fig. 1, a vehicle body frame F of a scooter-type motorcycle which constitutes a low-floor type vehicle includes a front fork 11 which pivotally supports a front wheel WF and a head pipe 13 which steerablly supports a steering handle 12 connected to the front fork 11 on a rear end thereof, while a unit-swing type power unit U which supports a rear wheel WR constituting a drive wheel on a rear end thereof is supported on a longitudinally middle portion of the vehicle body frame F in a rocking manner.

The vehicle body frame F includes the head pipe 13, a pair of left and right upper down frames 14... which is contiguously connected to the head pipe 13 and extends rearwardly and downwardly, a pair of left and right lower down frames 15... which is bent such that a front half portion thereof extends rearwardly and downwardly and a rear half portion thereof extends in the approximately horizontal direction and, then, is contiguously connected to the head pipe 13 below the upper down frames 14..., a pair of left and right seat rails 16... which extends rearwardly and upwardly from rear portions of the upper down frames 14..., and a pair of left and right center frames 17... which extends rearwardly and upwardly from rear ends of the lower down frames 15.... Further, rear ends of the upper down frames 14... are connected to middle portions of the center frames 17..., and upper ends of the center frames 17... are joined to middle portions of the seat rails 16....

A fuel tank 18 is mounted on the vehicle body frame F in front of the unit-swing type power unit U. Here, the fuel tank 18, the vehicle body frame F and a portion of the unit-swing type power unit U are covered with a vehicle body cover 19, and a tandem-type riding seat 20 is arranged on a rear portion of the vehicle body cover 19.

The unit-swing type power unit U is constituted of an engine E which forms a power engine having a cylinder axis C inclined forwardly such that the cylinder axis C becomes approximately horizontal and having a crankshaft 21 which forms an output shaft arranged parallel to a rotary axis of the rear wheel WR, and a belt-type continuously variable transmission M which forms a power transmission means for transmitting an output of the engine E to the rear wheel WR. Here, the rear wheel WR which is arranged on a right side of a rear portion of the unit-swing type power unit U is pivotally supported on a rear portion of the unit-swing type power unit U. Further, a rear cushion unit 22 is arranged between the rear portion of the unit-swing type power unit U and a rear portion of the vehicle body frame F.

In Fig. 2, a crankcase 23 of the engine E in the unit-swing type power unit U is supported on the vehicle body frame F in a rocking manner by way of a suspension means 24 which includes first and second link mechanisms 25, 26. Here, the first link mechanism 25 is arranged between contiguously connected portions of the lower down frames 15... and the center frames 17... in the vehicle body frame F and a lower portion of a front side of the crankcase 23, and the second link mechanism 26 is arranged between middle portions of the center frames 17 of the vehicle body frame F and an upper portion of a front side of the crankcase 23.

In Fig. 3, on both sides of a lower portion of a front side of the crankcase 23, first pivot portions 27, 27 are arranged in a left-and-right symmetry. On the other hand, on the contiguously connected portions of the lower down frames 15... and the center frames 17... in the vehicle body frame F, pivot sleeves 28, 28 which are coaxially arranged are fixedly mounted. Further, the first link mechanism 25 includes a first link member 29 which has one end portion thereof rotatably connected to the pivot sleeves 28, 28 and a second link member 30 which has one end portion thereof rotatably connected to another end portion of the first link member 29 and has another end portion thereof rotatably connected to the first pivot portion 27....

The first link member 29 is constituted of a first rotary sleeve 32 which is arranged between both pivot sleeves 28... in a state that thrust block washers 31, 31 are interposed between the first link member 29 and both pivot sleeves 28... and a pair of side plates 33, 33 which are arranged in parallel to each other in a spaced manner and have one end portions thereof fixedly mounted on an outer periphery of the first rotary sleeve 32. Here, a first connecting shaft 34 which penetrates the first rotary sleeve 32 coaxially is fixedly mounted on both of pivot sleeves 28..., while a pair of needle bearings 35, 35 is interposed between the first connecting shaft 34 and the first rotary sleeve 32. That is, one end portion of the first link member 29 is pivotally supported on both pivot sleeves 28... on the vehicle body frame F side in a state that one end portions are rotatable about an axis of the first connecting shaft 34.

The second link member 30 is constituted of a second rotary sleeve 37 which is arranged between another end portions of both side plates 33... in a state that thrust block washers 36, 36 are interposed between the second link member 30 and another end portions of both side plates 33... of the first link member 29, a third rotary sleeve 39 which is arranged between the first pivot portions 27... of the unit-swing type power unit U side and a pair of connecting plates 40, 41 which connect the second and third rotary sleeves 37, 39 to each other in a spaced-apart manner. On another end portions of both side plates 33... of the first link member 29, a second connecting shaft 42 which penetrates the second rotary sleeve 37 coaxially is fixedly mounted, while a pair of needle bearings 43, 43 are interposed between the second connecting shaft 42 and the second rotary sleeve 37. Further, in the first pivot portions 27..., cylindrical metal collars 44, 44 which are arranged coaxially are fitted in a rotatable manner. Further, a bolt 45 which has an enlarged-diameter head portion 45a thereof engaged with an outer end of one metal collar 44 penetrates the third rotary sleeve 39 and both metal collars 44... coaxially and a nut 46 which is engaged with an outer end of another metal collar 44 is threadedly engaged with the bolt 45.

That is, one end portion of the second link member 30 is rotatably connected to another end portion of the first link member 29 in a state that one end portion of the second link member 30 is rotatable about an axis of the second connecting shaft 42, and another end portion of the second link member 30 is rotatably connected to the first pivot portions 27... in a state that another end portion of the second link member 30 is rotatable about an axis of the bolt 45.

In Fig. 4, a second pivot portion 48 is mounted on a left side of a front-side upper portion of the crankcase 23, and a pair of support plates 49, 49 which are positioned below the second pivot portion 48 are fixedly mounted on a middle portion of the left center frame 17 of the vehicle body frame F in a state that the pair of support plates 49... extend in the rearward direction. Further, the second link mechanism 26 includes a third link member 50 which has one end thereof rotatably connected to the support plates 49... and a pair of fourth link members 51, 51 which are rotatably connected to another end portion of the third link member 50 and are rotatably connected to the second pivot portion 48, wherein a rubber bushing 52 is interposed between a middle portion of the third link member 50 and the fourth link members 51....

The third link member 50 has one end portion thereof arranged at a low position and has a middle portion thereof bent rearwardly thus allowing the middle portion to extend in the vertical direction, wherein the fourth rotary sleeve 53 is integrally formed on one end portion of the third link member 50, a fifth rotary sleeve 54 which is arranged parallel to the fourth rotary sleeve 53 is integrally mounted on another end portion of the third link member 50, and a restricting sleeve 55 which is arranged parallel to the fourth and fifth rotary sleeves 53, 54 is integrally mounted on the middle portion of the third link member 50.

The fourth rotary sleeve 53 is arranged between the pair of support plates 49... of the vehicle body frame F side, and a cylindrical metal collar 57 is inserted into the fourth rotary sleeve 53 in a state that a pair of resin collars 56, 56 is interposed between the fourth rotary sleeve 53 and the metal collar 57 and dish-shaped dust covers 58, 58 are interposed between the metal collar 57 and the support plates 49.... Further, a third connecting shaft 59 which penetrates the metal collar 57 concentrically is fixedly mounted on the support plates 49.... That is, one end portion of the third link member 50 is rotatably connected to the support plates 49... in a state that one end portion of the third link member 50 is rotatable about an axis of the third connecting shaft 59.

As explicitly shown in Fig. 2, the fourth link members 51... are formed in an approximately triangle plate shape, and rear portions of the fourth link members 51... are arranged on both sides of the second pivot portion 48. On the other hand, on the second pivot portion 48, the support sleeve 60 which is arranged parallel to an axis of the third connecting shaft 59 is fixedly mounted in a state that the support sleeve 60 has both ends thereof projected in both sideward directions from the second pivot portion 48. Here, the cylindrical metal collar 62 is coaxially inserted into the support sleeve 60 in a state that a pair of resin collars 61, 61 is interposed between the metal collar 62 and the support sleeve 60 and dish-shaped dust covers 63, 63 are interposed between the metal collar 62 and the fourth link members 51.... Further, a fourth connecting shaft 64 which coaxially penetrates the metal collar 62 is fixedly mounted on the fourth link members 51.... That is, rear portions of the fourth link members 51... are connected to the second pivot portion 48 in a state that the rear portions of the fourth link members 51... are rotatable about an axis of the fourth connecting shaft 59.

The fifth rotary sleeve 54 formed on another end portion of the third link member 50 is arranged between front upper portions of the fourth link members 51..., and a cylindrical metal collar 66 is inserted into the fifth rotary sleeve 54 concentrically in a state that a pair of resin collars 65, 65 is interposed between the metal collar 66 and the fifth rotary sleeve 54 and dish-shaped dust covers 67, 67 are interposed between the metal collar 66 and the fourth link members 51.... Further, a fifth connecting shaft 68 which coaxially penetrates the metal collar 66 is fixedly mounted on the fourth link members 51.... That is, another end portions of the third link members 50... are connected to a front upper portion of the second link members 51... in a state that another end portions of the third link members 50... are rotatable about an axis of the fifth connecting shaft 68.

The restricting sleeve 55 of the middle portion of the third link member 50 is arranged between lower portions of the fourth link members 51..., and a restricting shaft 68 which is inserted into an inner sleeve 67 of the rubber bush 52 which is inserted into the inside of the restricting sleeve 55 is fixedly mounted on a lower portion of the fourth link members 51.... Further, the relative postures of the third link member 50 and the fourth link members 51... are restricted to a range which allows the rubber bushing 52 to be deflectable in the inside of the restricting sleeve 55.

Here, two sets of pivot portions which are mounted on the unit-swing type power unit U side in front of the rotary axis of the rear wheel WR, that is, the first pivot portions 27... and the second pivot portion 48 are, as explicitly shown in Fig. 1, arranged separately above and below an imaginary straight line IL which connects the axis of the crankshaft 21 and the rotary axis of the rear wheel WR. Further, a first straight line L1 which connects a rotary center (an axis of the bolt 45) of the first pivot portions 27... which are arranged below the imaginary straight line IL and the connecting point of the first link mechanism 25 to the vehicle body frame F which connects the first pivot portions 27... to the vehicle body frame F is set such that the first straight line L1 is directed in the approximately longitudinal direction of the vehicle, and a second straight line L2 which connects a rotary center (an axis of the fourth connecting shaft 64) of the second pivot portion 48 which is arranged above the imaginary straight line IL and a connecting point (an axis of the third connecting shaft 59) of the second link mechanism 26 to the vehicle body frame F which connects the second pivot portion 48 to the vehicle body frame F is set such that the second straight line L2 is directed in the approximately vertical direction.

Further, at least one of the first and second link mechanisms 25, 26, both of the link mechanisms 25, 26 in this embodiment are configured in a so-called oleo link type. That is, these mechanisms 25, 26 can displace the unit-swing-type power unit U in two directions, for example, in the frontward and rearward direction and in the upper and lower direction.

By focusing on Fig. 2, in the inside of the crankcase 23 of the engine E, a balancer 70 which is interlockingly connected to the crankshaft 21 is accommodated in a state that the balancer 70 is arranged above the crankshaft 21. On the other hand, an intake system 77 which extends rearwardly is connected to a side surface of an upper portion of a cylinder head 71 which is mounted on the engine E. The intake system 77 is constituted of an intake pipe 72 which is connected to the cylinder head 71 and to which a fuel injection valve 73 is attached, a throttle body 74 which is connected to an upstream end of the intake pipe 72, a connection pipe 75 which is connected to an upstream end of the throttle body 74, and an air cleaner 76 which is connected to an upstream end of the connection pipe 75 and is arranged on a left side of the rear wheel WR. The balancer 70 is arranged below the connection pipe 75 which connects the throttle body 74 and the air cleaner 76.

Next, the manner of operation of this embodiment is explained. The suspension means 24 which is arranged between the unit-swing-type power unit U and the vehicle body frame F includes the first and second link mechanisms 25, 26 which individually connect two sets of pivot portions 27..., 48 mounted on the unit-swing-type power unit U to the vehicle body frame F at positions which are separated above and below the imaginary straight line IL which connects the axis of the crankshaft 21 and the rotary axis of the rear wheel WR as viewed in a side view, and at least one of both link mechanisms 25, 26, both of the link mechanisms 25, 26 in this embodiment are configured to displace the unit-swing-type power unit U in two directions, for example, in the longitudinal direction as well as in the vertical direction and hence, it is possible to enhance the rolling rigidity by restricting the behavior of the unit-swing type power unit U in the rolling direction thereof thus reducing the vibrations.

Further, the first and second link mechanisms 25, 26 are constituted of the so-called oleo-link-type mechanism and hence, these link mechanisms 25, 26 can contribute to the reduction of coupling vibrations which correspond to a distance between the balancer 70 and the crankshaft 21 or the reduction of the secondary vibrations of the crankshaft 21.

Further, the first straight line L1 which connects the rotary center of the first pivot portion 27 which is arranged below the imaginary straight line IL out of the two sets of pivot portions 27..., 48 which are provided to the unit-swing-type power unit U in front of the rotary axis of the rear wheel WR and the connecting point of the first link mechanism 25 to the vehicle body frame F is set such that the first straight line L1 is directed in the approximately longitudinal direction of the vehicle. Further, the second straight line L2 which connects the rotary center of the second pivot portion 48 which is arranged above the imaginary straight line IL and the connecting point of the second link mechanism 26 to the vehicle body frame F is set such that the second straight line L2 is directed approximately vertical direction of the vehicle. Accordingly, it is possible to allow an instantaneous center (a point at which the first straight line L1 and the second straight line L2 intersect each other) of the rocking of the unit-swing type power unit u to assume a position remote from the rotary axis of the rear wheel WR and, at the same time, in front of and below the unit-swing type power unit U thus easily attenuating impacts of the vehicle at the time of traveling on a terrain or the like.

Further, in the second link mechanism 26 which connects the second pivot portion 48 which is arranged above the imaginary straight line IL and the vehicle body frame F, the connecting point of the second link mechanism 26 to the vehicle body frame F is arranged below the second pivot portion 48 and hence, it is possible to arrange the second link mechanism 26 at a position in front of and below the unit-swing-type power unit U whereby it is possible to easily ensure a space for arranging the parts such as the throttle body 74 of the intake system 77 above the engine E.

Further, the internal combustion engine E which has the frontwardly inclined cylinder axis C includes the balancer 70 which is arranged above the crankshaft 21 and hence, it is possible to further reduce the vibrations using the balancer 70 and, at the same time, in the internal combustion engine E which has the forwardly inclined cylinder axis C, it is possible to arrange the balancer 70 by effectively making use of the vacant space formed above the crankshaft 21.

Still further, the balancer 70 is arranged below the connection pipe 75 which connects the throttle body 74 and the air cleaner 76 and hence, it is possible to arrange the balancer 70 by effectively making use of the space formed below the connection pipe 75.

As another embodiment of the present invention, there may be a case that the second pivot portion 48 is arranged on both left and right sides of the unit-swing-type power unit U and a pair of second link mechanisms 26... which is separated into left and right is arranged between a pair of second pivot portions 48... and the vehicle body frame F. In this case, by adopting the constitution which allows the pair of second link mechanisms 26... to be rotatable with phases opposite to each other, it is possible to absorb disturbance in the lateral direction from the road surface by preventing the excessive increase of the support rigidity in the yaw (rotation about a vertical axis) direction of the unit-swing-type power unit U.

Further, although the oleo link is used in the above-mentioned embodiment, in place of such an oleo link, by changing an elastic repulsive force of one link corresponding to circumferential positions by reducing wall thicknesses of the link, the unit-swing-type power unit U may be displaced in two directions together with the behavior of the link.

Although the embodiment of the present invention has been explained heretofore, the present invention is not limited to the above-mentioned embodiment, and various design modifications can be made without departing from the present invention described in the claims.

### Description of Reference Numerals and Signs

- 21:: crankshaft which constitutes output shaft
- 24:: suspension means
- 25, 26:: link mechanism
- 27:: first pivot portion
- 48:: second pivot portion
- 70:: balancer
- 74:: throttle body
- 75:: connection pipe
- 76:: air cleaner
- C:: cylinder axis
- E:: internal combustion engine which constitutes a power engine
- F:: vehicle body frame
- IL:: imaginary straight line
- L1:: first straight line
- L2:: second straight line
- M:: belt-type continuously variable transmission which constitutes a power transmission means
- WR:: rear wheel which constitutes a drive wheel

## Claims

1. A low-floor vehicle comprising a unit-swing-type power unit (U) which is constituted of a power engine (E) which has an output shaft (21) arranged parallel to a rotary axis of a drive wheel (WR) and a power transmission means (M) which transmits a rotary power of the output shaft (21) to the drive wheel (WR) being supported on a vehicle body frame (F) in a rocking manner by way of a suspension means (24), wherein
the suspension means (24) includes a pair of link mechanisms (25, 26) which individually connect two sets of pivot portions (27, 48) mounted on the unit-swing-type power unit (U) to the vehicle body frame (F) at positions which are separated from each other above and below an imaginary straight line (IL) which connects an axis of the output shaft (21) and a rotary axis of the drive wheel (WR) as viewed in a side view, and
at least one of both link mechanisms (25, 26) is arranged to displace the unit-swing-type power unit (U) in two directions, and at least one of the link mechanisms (26) includes a first link member (50) and a pair of second link members (51, 51),
**characterized in that** the first link member (50)
has one end thereof rotatably connected to a pair of support plates (49) which are positioned below the second pivot portion (48) and which are fixedly mounted on a middle portion of a centre frame (17) of the vehicle body frame (F) and the pair of second link members (51, 51) are rotatably connected to another end portion of the first link member (50) and are rotatably connected to the second pivot portion (48), wherein
a rubber bushing (52) is interposed between a middle portion of the first link member (50) and the second link members (51, 51), and
the second link members (51,51) are formed in an approximately triangle plate shape, and rear portions of the second link members (51, 51) are arranged on both sides of the second pivot portion (48).

2. The low-floor vehicle according to claim 1, wherein the suspension means (24) includes a plurality of link mechanisms (25, 26) which connect pivot portions (27, 48) which are provided at a plurality of positions of the unit-swing-type power unit (U) which are different from each other as viewed in a side view respectively to the vehicle body frame (F), and the plurality of link mechanisms (25, 26) are arranged to displace the unit-swing-type power unit (U) in two directions.

3. The low-floor vehicle according to claim 1 or claim 2, wherein the power engine (E) is an internal combustion engine which includes a forwardly inclined cylinder axis (C) and, at the same time, includes a balancer (70) which is arranged above a crankshaft (21) which constitutes the output shaft.

4. The low-floor vehicle according to any of the preceding claims, wherein the balancer (70) is arranged below a connection pipe (75) which connects a throttle body (74) and an air cleaner (76).

5. The low-floor vehicle according to claim 1, wherein a first straight line (L1) which connects a rotary center of the first pivot portion (27) which is arranged below the imaginary straight line (IL) out of the two sets of pivot portions (27, 48) which are provided to the unit-swing-type power unit (U) in front of the rotary axis of the drive wheel (WR) and a connecting point of the link mechanism (25) to the vehicle body frame (F) which connects the first pivot portion (27) to the vehicle body frame (F) out of the pair of link mechanisms (25, 26) is set to be directed in the approximately longitudinal direction, and a second straight line (L2) which connects a rotary center of the second pivot portion (48) which is arranged above the imaginary straight line (IL) out of the both pivot portions (27, 48) and a connecting point of the link mechanism (26) to the vehicle body frame (F) which connects the second pivot portion (48) to the vehicle body frame (F) out of both link mechanisms (25, 26) is set to be directed in the approximately vertical direction.

## Patentansprüche

1. Niederflurfahrzeug, umfassend eine Schwenkantriebseinheit (U), die aus einer Kraftmaschine (E), die eine parallel zu einer Drehachse eines Antriebsrads (WR) angeordnete Abtriebswelle (21) aufweist, und einem Kraftübertragungsmittel (M) gebildet ist, das eine Drehkraft der Abtriebswelle (21) an das Antriebsrad (WR) überträgt, das an einem Fahrzeugkörperrahmen (F) in einer schwenkbaren Weise durch ein Aufhängungsmittel (24) gelagert ist, worin
das Aufhängungsmittel (24) ein Paar Verbindungsvorrichtungen (25, 26) beinhaltet, die zwei Gruppen von Drehteilen (27, 48), die an der Schwenkantriebseinheit (U) angebracht sind, einzeln mit dem Fahrzeugkörperrahmen (F) an Stellen verbinden, die voneinander oberhalb und unterhalb einer gedachten geraden Linie (IL) getrennt sind, die, in einer Seitenansicht betrachtet, eine Achse der Abtriebswelle (21) und eine Drehachse des Antriebsrads (WR) verbindet, und
wenigstens eine der beiden Verbindungsvorrichtungen (25, 26) angeordnet ist, die Schwenkantriebseinheit (U) in zwei Richtungen zu verlagern, und wenigstens eine der Verbindungsvorrichtungen (26) ein erstes Verbindungselement (50) und ein Paar zweiter Verbindungselemente (51, 51) beinhaltet,
**dadurch gekennzeichnet, dass**
das erste Verbindungselement (50) ein Ende hiervon drehbar mit einem Paar Trägerplatten (49) verbunden aufweist, die unterhalb des zweiten Drehteils (48) angeordnet sind und starr an einem Mittelteil eines Mittelrahmens (17) des Fahrzeugkörperrahmens (F) angebracht sind, und das Paar zweiter Verbindungselemente (51, 51) drehbar mit einem anderen Endteil des ersten Verbindungselements (50) verbunden ist und drehbar mit dem zweiten Drehteil (48) verbunden ist, worin
eine Gummidurchführung (52) zwischen einem Mittelteil des ersten Verbindungselements (50) und den zweiten Verbindungselementen (51, 51) eingefügt ist und
die zweiten Verbindungselemente (51, 51) in einer annähernd dreieckigen Plattenform ausgebildet sind und hintere Teile der zweiten Verbindungselemente (51, 51) an beiden Seiten des zweiten Drehteils (48) angeordnet sind.

2. Niederflurfahrzeug gemäß Anspruch 1, worin das Aufhängungsmittel (24) mehrere Verbindungsvorrichtungen (25, 26) beinhaltet, die Drehteile (27, 48) verbinden, die an mehreren Stellen der Schwenkantriebseinheit (U) bereitgestellt sind, die, in einer Seitenansicht entsprechend des Fahrzeugkörperrahmens (F) betrachtet, voneinander verschieden sind, und die mehreren Verbindungsvorrichtungen (25, 26) angeordnet sind, die Schwenkantriebseinheit (U) in zwei Richtungen zu verlagern.

3. Niederflurfahrzeug gemäß Anspruch 1 oder 2, worin die Kraftmaschine (E) ein Verbrennungsmotor ist, der eine nach vorne geneigte Zylinderachse (C) beinhaltet und gleichzeitig eine Ausgleichsvorrichtung (70) beinhaltet, die oberhalb einer Kurbelwelle (21) angeordnet ist, die die Abtriebswelle bildet.

4. Niederflurfahrzeug gemäß einem der vorhergehenden Ansprüche, worin die Ausgleichsvorrichtung (70) unterhalb eines Verbindungsrohrs (75) angeordnet ist, das ein Vergaseroberteil (74) und einen Luftfilter (76) verbindet.

5. Niederflurfahrzeug gemäß Anspruch 1, worin eine erste gerade Linie (L1), die eine Drehmitte des ersten Drehteils (27), das unterhalb der gedachten geraden Linie (IL) angeordnet ist, aus den zwei Gruppen der Drehteile (27, 48), die der Schwenkantriebseinheit (U) vor der Drehachse des Antriebsrads (WR) bereitgestellt sind, und einen Verbindungspunkt der Verbindungsvorrichtung (25) mit dem Fahrzeugkörperrahmen (F) verbindet, der den ersten Drehteil (27) mit dem Fahrzeugkörperrahmen (F) aus dem Paar der Verbindungsvorrichtungen (25, 26) verbindet, festgelegt ist, annähernd in Längsrichtung gerichtet zu sein, und eine zweite gerade Linie (L2), die eine Drehmitte des zweiten Drehteils (48), das oberhalb der gedachten geraden Linie (IL) angeordnet ist, aus den beiden Drehteilen (27, 48) und einen Verbindungspunkt der Verbindungsvorrichtung (26) mit dem Fahrzeugkörperrahmen (F) verbindet, der den zweiten Drehteil (48) mit dem Fahrzeugkörperrahmen (F) aus den beiden Verbindungsvorrichtungen (25, 26) verbindet, festgelegt ist, annähernd in vertikale Richtung gerichtet zu sein.

## Revendications

1. Véhicule à plancher surbaissé comprenant une unité motrice de type oscillant monobloc (U) qui se compose d'un moteur à combustion interne (E) qui comprend un arbre de sortie (21) aménagé parallèlement à un axe de rotation d'une roue motrice (WR) et des moyens de transmission de puissance (M) qui transmettent en rotation une puissance de l'arbre de sortie (21) à la roue motrice (WR) qui est supportée en oscillation sur un cadre de corps de véhicule (F) par l'intermédiaire de moyens de suspension (24), dans lequel :
les moyens de suspension (24) comprennent une paire de mécanismes à biellettes (25, 26) qui connectent individuellement deux jeux de parties de pivotement (27, 48) montées sur l'unité motrice de type oscillant monobloc (U) sur le cadre de corps de véhicule (F) dans des positions qui sont séparées les unes des autres au-dessus et au-dessous d'une ligne imaginaire rectiligne (IL) qui relie un axe de l'arbre de sortie (21) et un axe de rotation de la roue motrice (WR) lorsqu'ils sont vus de côté ; et
au moins l'un des deux mécanismes à biellettes (25, 26) est aménagé de manière à déplacer l'unité motrice de type oscillant monobloc (U) dans deux directions, et au moins l'un des mécanismes à biellettes (26) comprend un premier élément de biellette (50) et une paire de seconds éléments de biellettes (51, 51),
**caractérisé en ce que** le premier élément de biellette (50) comprend une extrémité de celui-ci connecté en rotation à une paire de plaques de support (49) qui sont positionnées au-dessous de la seconde partie de pivotement (48) et qui sont montées de manière fixe sur une partie intermédiaire du cadre central (17) du cadre de corps de véhicule (F) et la paire de seconds éléments de biellettes (51, 51) est connectée en rotation à une autre partie d'extrémité du premier élément de biellette (50) et est connectée en rotation à la seconde partie de pivotement (48), dans laquelle :
une bague en caoutchouc (52) est disposée entre une partie intermédiaire du premier élément de biellette (50) et les seconds éléments de biellette (51, 51), et
les seconds éléments de biellette (51, 51) ont une forme de plaque approximativement triangulaire, et des parties arrière des seconds éléments de biellette (51, 51) sont disposées sur les deux côtés de la seconde partie de pivotement (48).

2. Véhicule à plancher surbaissé selon la revendication 1, dans lequel les moyens de suspension (24) comprennent une pluralité de mécanismes à biellettes (25, 26) qui connectent des parties de pivotement (27, 48) qui sont aménagées dans une pluralité de positions de l'unité motrice de type oscillant monobloc (U) qui sont différentes les unes des autres lorsqu'elles sont vues respectivement de côté par rapport au cadre de corps de véhicule (F), et la pluralité de mécanismes à biellettes (25, 26) est aménagée de manière à déplacer l'unité motrice de type oscillant monobloc (U) dans deux directions.

3. Véhicule à plancher surbaissé selon la revendication 1 ou la revendication 2, dans lequel le moteur d'entraînement (E) est un moteur à combustion interne qui comprend un axe de cylindre (C) incliné vers l'avant et, en même temps, comprend un dispositif d'équilibrage (70) qui est disposé au-dessus d'un vilebrequin (21) qui constitue l'arbre de sortie.

4. Véhicule à plancher surbaissé selon l'une quelconque des revendications précédentes, dans lequel le dispositif d'équilibrage (70) est disposé au-dessous d'un tuyau de connexion (75) qui relie un corps de papillon des gaz (74) à un filtre à air (76).

5. Véhicule à plancher surbaissé selon la revendication 1, dans lequel une première ligne rectiligne (L1) qui relie un centre de rotation de la première partie de pivotement (27) qui est située au-dessous de la ligne imaginaire rectiligne (IL) à partir des deux jeux de parties de pivotement (27, 48) qui sont aménagées sur l'unité motrice de type oscillant monobloc (U) à l'avant de l'axe de rotation de la roue motrice (WR) et d'un point de connexion du mécanisme à biellettes (25) sur le cadre de corps de véhicule (F) qui relie la première partie de pivotement (27) au cadre de corps de véhicule (F) à partir de la paire de mécanismes à biellettes (25, 26) est ajustée de manière à être dirigée dans une direction approximativement longitudinale, et une seconde ligne rectiligne (L2) qui relie un centre de rotation de la seconde partie de pivotement (48) qui est située au-dessus de la ligne imaginaire rectiligne (IL) à partir des deux parties de pivotement (27, 48) et d'un point de connexion du mécanisme à biellettes (26) sur le cadre de corps de véhicule (F) qui relie la seconde partie de pivotement (48) au cadre de corps de véhicule (F) à partir des deux mécanismes à biellettes (25, 26) est ajustée de manière à être dirigée dans une direction approximativement verticale.
